# EUROPEAN PATENT APPLICATION

(11) **EP 1 387 308 A1**
(43) Date of publication of application: **04.02.2004**
(21) Application number: 03015045.2
(22) Date of filing: 02.07.2003
(51) Int. Cl.: G06K 7/00, G06F 1/16, H05K 5/02, H04B 1/38, H01Q 1/22

(54) **IC Card processing apparatus**

(30) Priority: 01.08.2002 JP 2002225252
(71) Applicant: Kabushiki Kaisha Toshiba, Tokyo (JP)
(72) Inventor: Satomi, Takeshi, c/o Toshiba Corporation, Minato-ku, Tokyo 105-8001 (JP)
(74) Representative: Henkel, Feiler, Hänzel

(57) **Abstract**

A card processing apparatus of the embodiment of this invention includes a card receiver (12) and a protective member (14) which protects part of a card that projects from the card receiver when the card receiver receives the card.

## Description

The present invention relates to an apparatus which receives a card such as a PC card, inputs information to the PC card, or receives information from the PC card.

Generally, an apparatus, i.e., a so-called card reader which is used while being connected to a PC (Personal Computer) or the like is known. The PC card reader is constructed by integrally assembling a PC card receiver, circuit board, and outer cabinet. The PC card reader is used while being connected to a PC through A cable. Data from the PC is transmitted to the outside, or external data is input to the PC through a PC card attached to the PC card reader. In addition, some of popular PCs have a PC card slot.

However, some PC cards such as wireless LAN cards have large sizes. When such a large card is inserted into a PC card reader or card slot, the card may partially project from the PC card reader or card slot. For, e.g., a wireless LAN card, the antenna portion may project. In other words, that portion must be exposed because it is an antenna portion. If an external force acts on the card and, for example, an object hits the exposed portion during carrying the apparatus, the card may break. This phenomenon is conspicuous for cards used in portable electronic devices such as a notebook personal computer and data projector.

Jpn. Pat. Appln. KOKAI Publication No. 10-283450 discloses a technique related- to an anti-shock structure of a PC card. According to this technique, an anti-shock structure is attached to a PC card to protect it from shock. However, according to this technique, the anti-shock structure must be attached to the PC card every time. This results in a problem of operability.

It is an object of the present invention to provide a card processing apparatus which can protect a PC card without any special operation.

An apparatus according to an aspect of the present invention comprises a body, and a unit which is arranged in the body, wherein the unit comprises a card receiver, and a protective member which protects part of the card that projects from the card receiver when the card receiver receives the card.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing the outer appearance of a data projector to which a card processing apparatus according to an embodiment of the present invention is applied;
FIG. 2 is a perspective view showing the outer appearance of the card processing apparatus according to the embodiment of the present invention;
FIG. 3 is an exploded view showing a state wherein the card processing apparatus shown in FIG. 2 is incorporated in the data projector shown in FIG. 1;
FIG. 4 is a view (final view) showing a state wherein the card processing apparatus shown in FIG. 2 is incorporated in the data projector (excluding the camera arm portion) shown in FIG. 1;
FIG. 5 is a view (final view) showing a state wherein the card processing apparatus shown in FIG. 2 is incorporated in the data projector shown in FIG. 1; and
FIG. 6 is an exploded view showing a state wherein the card processing apparatus shown in FIG. 2 is incorporated in the data projector shown in FIG. 1 and, more particularly, a state wherein the card processing apparatus has an eject lever.

An embodiment of the present invention will be described below with reference to the accompanying drawing.

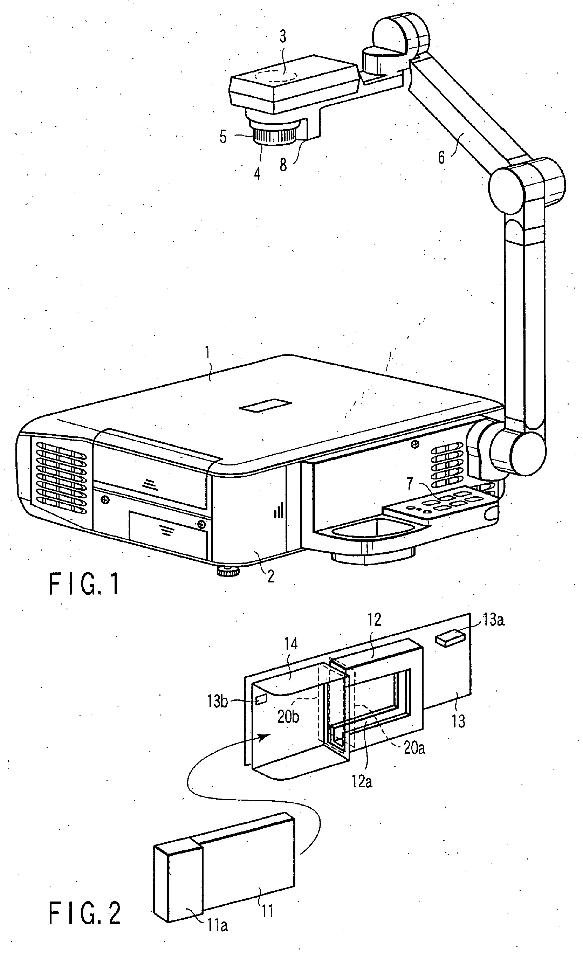

FIG. 1 is a view showing the outer appearance of a data projector to which a card processing apparatus according to the embodiment of the present invention is applied. As shown in FIG. 1, the data projector has an original table 1, PC card slot cover 2, camera head 3, original table 1, PC card slot cover 2 camera head 3, camera lens 4, camera focus ring 5, camera arm 6, camera operation section 7, camera illumination section 8, and the like.

An original to be read is placed on the original table 1. The PC card slot cover 2 covers a PC card slot. The data projector can be connected to another electronic device using a PC card. The camera head 3 has the camera lens 4, camera focus ring 5, and camera illumination section 8. The camera lens 4 is a lens used to read the original to be read, which is placed on the original table 1. The camera focus ring 5 is the focus adjusting mechanism of the camera. The camera arm 6 is an arm which adjusts the positional relationship between the camera lens 4 and the original to be read, which is placed on the original table 1. The camera operation section 7 receives operation inputs such as various settings related to original reading by the camera head 3. The camera illumination section 8 illuminates the original to read it.

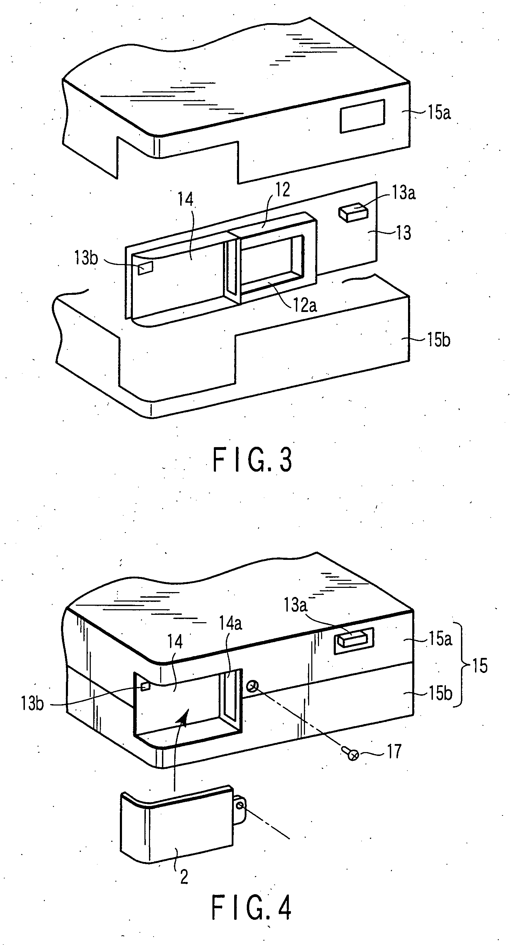

FIG. 2 is a perspective view showing the outer appearance of the card processing apparatus according to the embodiment of the present invention. As shown in FIG. 2, the card processing apparatus receives a PC card 11 and transmits/receives data through the PC card 11. The card processing apparatus comprises a PC card receiver 12, circuit board (unit) 13, guide member 14, and the like. The circuit board 13 has a socket 13a. 'The guide member 14 has a pilot lamp 13b.

When the PC card 11 is inserted into the card processing apparatus, i.e., when the PC card 11 is inserted into the PC card receiver 12, an end portion 11a of the PC card 11 projects from the PC card receiver 12.

The PC card receiver 12 has a guide rail 12a. When the PC card 11 is being inserted into the PC card receiver 12, the PC card 11 is guided by the guide rail 12a and received by the PC card receiver 12. That is, the PC card 11 can freely be attached/detached to/from the PC card receiver 12. The PC card receiver 12 is attached to the circuit board 13. More specifically, when the PC card 11 is received by the PC card receiver 12, the PC card 11 is connected to the circuit board 13 as a circuit. In addition, the circuit board 13 is connected to a given electronic device (e.g., a data projector). As a result, the PC card 11 is connected to the given electronic device.

For example, assume that the PC card 11 is a wireless LAN card, and the end portion 11a is a wireless circuit block. That is, assume that the wireless circuit, block projects from the PC card receiver 12. The guide member 14 is attached to the circuit board 13. The guide member 14 is designed to surround the end portion 11a of the PC card 11 that is received by the PC card receiver 12. That is, the guide member 14 functions as a protective member for the PC card 11 (end portion 11a) The guide member 14 prevents the PC card 11 (end portion 11a from breaking. In addition, the guide member 14 also functions as a guide rail for the PC card 11 to be attached/detached. Hence, the PC card 11 can easily be attached/detached.

The positional relationship between the PC card receiver 12 and the guide member 14 will now be described in more detail. As described above, the PC card receiver 12 -receives the PC card 11. This will be described in more detail. As indicated by the broken line in FIG. 2, the PC card 11 is received by the PC card receiver 12 through an insertion slot 20a. On the other hand, the guide member 14 protects the PC card 11. When the PC card 11 is going to be inserted into the PC card receiver 12, the PC card 11 passes through the guide member 14. More specifically, as indicated by the broken line in FIG. 2, the PC card 11 is inserted into the PC card receiver 12 through an exit slot 20b of the guide member 14. That is, the insertion slot 20a of the PC card receiver 12 and the exit slot 20b of the guide member 14 oppose each other.

FIG. 3 is an exploded view showing a state before the card processing apparatus shown in FIG. 2 is incorporated in the data projector shown in FIG. 1. As shown in FIG. 3, the data projector has a top cabinet 15a and bottom cabinet 15b. The circuit board 13 is incorporated in a cabinet 15 (body) constructed by the top cabinet 15a and bottom cabinet 15b. The guide member 14 has a structure that can be integrated with the cabinet. The guide member 14 is exposed from the cabinet. Accordingly, the end portion 1 of the PC card 11 protected by the guide member 14 is exposed from the cabinet. As a result, the end portion 11a of the PC card 11 can execute its function. More specifically, the end portion 11a is, e.g., a wireless circuit block which cannot sufficiently function unless it is exposed from the cabinet.

FIG. 4 is a view (final view) showing a state wherein the card processing apparatus shown in FIG. 2 is incorporated in the data projector'(excluding the camera arm portion) shown in FIG. 1.

As shown in FIG. 1, the data projector has the PC card slot cover 2. The PC card slot cover 2 is designed to be able to freely be attached/detached to/from the guide member 14. With this structure, when the card processing apparatus shown in FIG. 2 is to be incorporated in the data projector shown in FIG. 1, the PC card 11 received by the PC card receiver 12 can be completely covered by attaching the PC card slot cover 2. Hence, dust and the like can be prevented from entering from a card slot 14a. In addition, any external force can be prevented from acting on the PC card. Furthermore, any unwanted detachment of the PC card'can also be prevented. If dust enters the PC card receiver, an external force acts on the PC card, or the PC card is unintentionally detached, the data of the PC card may break. 'That is, the' data of the PC card can be more reliably protected by attaching the PC card slot cover 2.

In addition, when the PC card slot cover 2 is made of a transparent material, blinking of the pilot lamp 13b can be confirmed without detaching the PC card slot cover 2, resulting in convenience.

If the data projector does not incorporate the card processing apparatus, the PC card slot cover 2 can be fixed with a screw 17. When the PC card slot cover 2 has the same color as that of a cabinet 15 constituted by the top cabinet 15a and bottom cabinet 15b, any erroneous detachment of the PC card slot cover 2 by the user can be prevented. Hence, foreign substances can be prevented from entering the interior.

With the above arrangement, the cabinet formed from the top cabinet 15a and bottom cabinet 15b can be commonly used independently of whether the card processing apparatus should be incorporated. More specifically, independently of whether the card processing apparatus should be incorporated, cabinets can have the same outer dimensions, and a common packing material can be used. As a consequence, the cost can be reduced because the mass production effect increases.

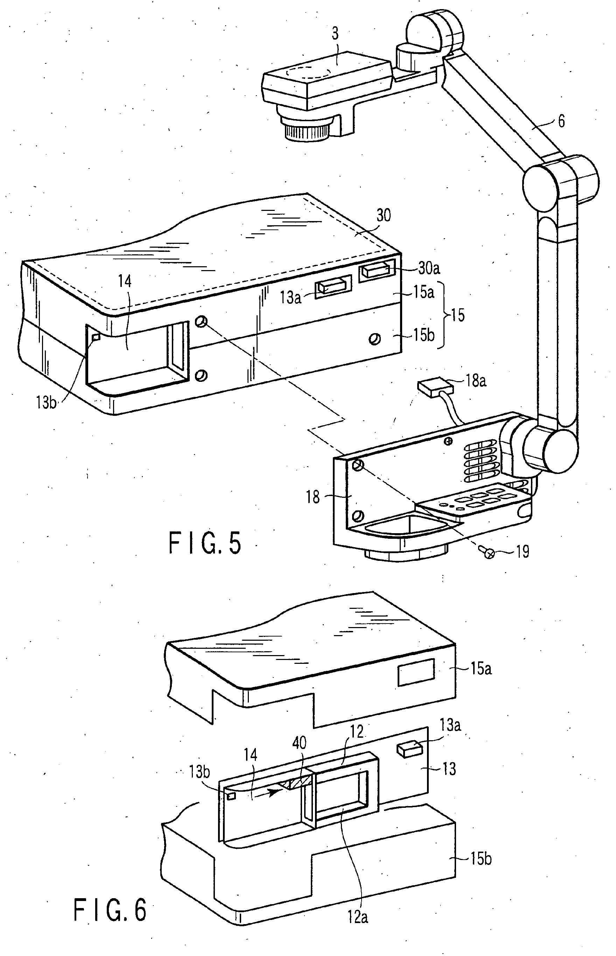

FIG. 5 is a view (final view) showing a state wherein the card processing apparatus shown in FIG. 2 is incorporated in the data projector shown in FIG. 1.

The camera arm 6 shown in FIG. 1 is attached to the cabinet 15 formed from the top cabinet 15a and bottom cabinet 15b with screws 19. A camera arm support 18 has a power supply plug 18a. When the power supply plug 18a is inserted into the socket 13a arranged in the circuit board 13, the power supply plug 18a and socket 13a are connected as a circuit. As a result, an image signal read by the camera head 3 is supplied from the power supply plug 18a to the socket 13a and supplied from the socket 13a, through the circuit board 13, to the PC card 11 received by the PC card receiver 12. That is, the data projector can directly provide the image signal read by the camera head 3 to the PC card 11 without intervening a main circuit board 30 of the data projector. In this case, the signal output from the power supply plug 18a is a digital signal which is provided to the PC card 11 without being converted into an analog signal midway.

The main circuit board 30 of the data projector has a socket 30a. When the power supply plug 18a is inserted into the socket 30a, the image signal read by the camera head 3 is provided to the PC card 11 through the main circuit board 30. In this case, the signal output from the power supply plug 18a is a digital signal. This signal is converted into an analog signal midway, converted into a digital signal again, and then provided to the PC card 11.

In this embodiment, the camera arm 6 has a folding arm structure. In this case, the card processing apparatus (guide member 14) is set at a position not to impede attachment/detachment of the PC card 11 even when the camera arm 6 is folded.

FIG. 6 is an exploded view showing a state wherein the card processing apparatus shown in FIG. 2 is incorporated in the data projector shown in FIG. 1 and, more particularly, a state wherein the card processing apparatus has an eject lever. As shown in FIG. 6, when an eject lever 40 is pushed in the direction indicated by an arrow, the PC card received by the PC card receiver can be detached safely and reliability. Because of the structure of the eject lever 40, the push amount of the eject lever 40 is limited. Hence, excess pushing is impossible. Accordingly, popping of the PC card upon excess pushing can be prevented.

## Claims

1. A card processing apparatus comprising a body (15), and a unit (13) which is arranged in the body, **characterized in that**
the unit (13) comprises
a card receiver (12) which receives a card, and
a protective member (14) which protects part of the card that projects from the card receiver when the card receiver receives the card.

2. An apparatus according to claim 1, **characterized in that**
the card receiver (12) has an insertion slot (20a) to receive the card,
the protective member (14) has an exit slot (20b) to send the card to the first insertion slot (20a) of the card receiver, and
the insertion slot (20a) and the exit slot (20b) oppose each other.

3. An apparatus according to claim 1, **characterized in that**
the card receiver (12) is accommodated in the body, and the protective member (14) is exposed from the body.
